# EUROPÄISCHE PATENTANMELDUNG

(11) **EP 3 925 493 A1**
(43) Veröffentlichungstag der Anmeldung: **22.12.2021**
(21) Anmeldenummer: 21000157.4
(22) Anmeldetag: 16.06.2021
(51) Int. Cl.: A47C 19/00, A47C 19/04, A47C 23/06, F16B 12/46

(54) **HOLZBETT, HÖHENVERSTELLBAR, OHNE SCHRAUBEN, ZARGEN, KLEBSTOFF ODER SONSTIGE HILFSMITTEL**

(30) Priorität: 17.06.2020 DE 102020003600
(71) Anmelder: Weiss, Shlomo, 45143 Essen (DE)
(72) Erfinder: Weiss, Shlomo, 45143 Essen (DE)

(57) **Zusammenfassung**

Das Holzbett wird durch die Anordnung der genuteten Leisten höhenverstellbar, ohne Metall und Klebstoff, sondern nur aus Holz. Die Art und Weise der Nuten und ihre Anordnung, verleihen dem Bett eine außergewöhnliche Aufbauweise, als Baukasten mit einzelnen Leisten ,die beliebig oft angeordnet werden können und anhand der Anordnung das Lattenrost von Boden bis zur beliebigen Höhe als Liege und auch als Sitzfläche anheben.

Das Prinzip kann auf Betten jeder Dimension, ob Einzel- oder Doppelbetten angewandt werden. Die Seitenleisten (oder Längsleisten) sind so angeordnet, dass sie zum einen das Lattenrost tragen, zum anderen am Lattenrost abschließen, dass es nicht verrutschen kann.

Es ist ein Bett dass nur aus Holz höhenverstellbar ist. Es kann als Doppelhochbett mit genuteten Zwischenhölzer, die sogar eine Leiter bilden, über die man zur oberen Doppelhochbetthälfte hinauf klettern kann.

## Beschreibung

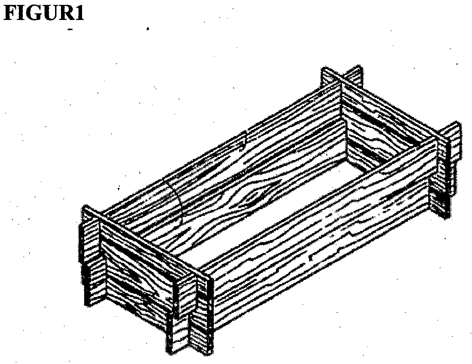

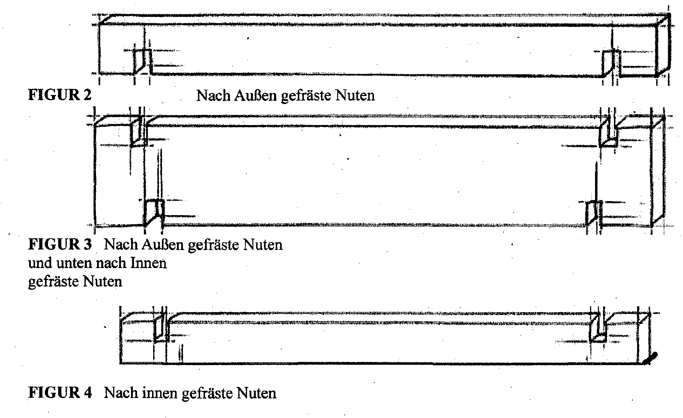

Wie bei Darstellung **Figur 1****,** bestehen das Kopf- und Fußende jeweils aus 3 Holzelemente. Eine schmale untere Kopf- und Fußleiste, **Figur 4** mit zwei Nuten die etwas nach Innen gefräst sind, und mit den Nuten nach oben auf den Boden liegen. Die Kopf- und -Fußleiste bildet die Breite des Bettes.

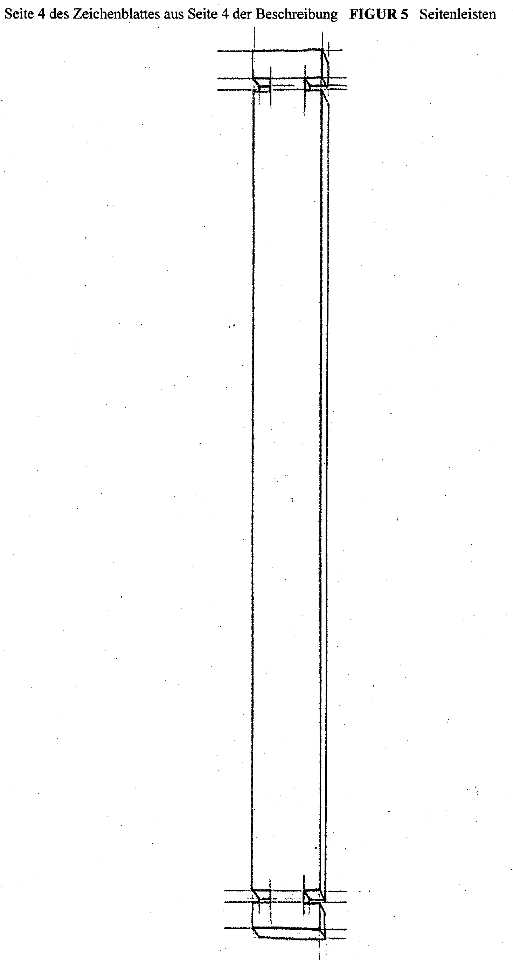

In ihnen werden 2 Seitenleisten **Figur 5** links und rechts eingesteckt. Die Seitenleisten bilden die Länge des Bettes.

Die unteren Nuten von **Figur 5** werden mit den Nuten von **Figur 4****,** die schmale Leiste, die auf den Boden mit den Nuten nach oben liegt, verbunden., bzw, eingesteckt. Diese Seitenleisten **Figur 5** haben eine ausreichende Stärke, um ein Lattenrost aufliegen zu lassen.

Als nächstes wird eine breite Leiste, Kopf - und Fußleiste **Figur 3****,** die vier Nuten hat, von denen zwei mehr nach Ihnen und zwei mehr nach Außen versetzt gefräst sind, in die oberen Nuten von Seitenleisten **Figur 5** mit den mehr nach Innen gefrästen Nuten eingesteckt. Die zwei anderen, mehr nach Außen gefräste Nuten von **Figur 3** zeigen nach oben, in ihnen werden wiederum 2 Seitenleisten **Figur 5** eingesteckt. Nun sind zwei **Figur 5** Seitenleisten mehr nach Innen und liegen auf den Boden auf, sie tragen das Lattenrost auf sich, und zwei Seitenleisten **Figur 5** sind etwas nach Außen versetzt, und halten das Lattenrost stabil. Es kann nicht nach links oder nach rechts verrutschen, wie in Darstellung **Figur 1**

Zuletzt wird oben auf schmalere Kopf- und Fußleisten, **Figur 2** mit 2 Nuten die mehr nach Außen gefräst werden auf die oberen Seitenleisten **Figur 5** eingesteckt und schließen das Bett wie bei Darstellung **Figur1** ab.

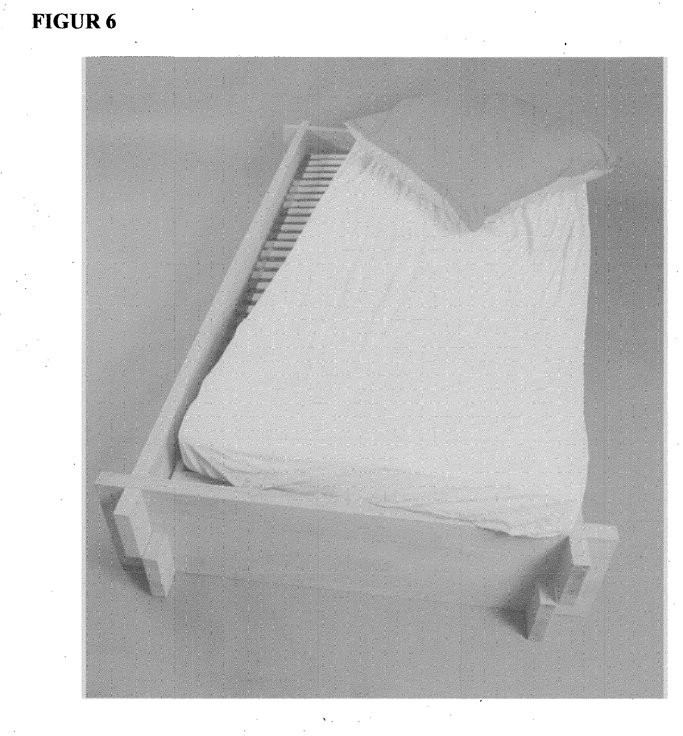

Hierzu noch einmal die Abbildung der geschilderten Leisten;
Auf Seite 3 des Zeichungblattes
   Darstellung zur Erklärung Nr 1
   und
**FIGUR 2** Nach Außen gefräste Nuten
   und
**FIGUR 3** Nach Außen gefräste Nuten
   und unten nach Innen
   gefräste Nuten
   und
**FIGUR 4** Nach innen gefräste Nuten
**FIGUR 5** Fig Seitenleisten
   Die Stärke der Seitenleisten bilden die Aufliegeflächen für das Lattenrost. Seite 4 des Zeichnungblattes
Seite 5 des Zeichenblattes
   Auf **Bild** **FIGUR** 6 ist deutlich zu sehen, wie das Lattenrost auf den beiden mehr nach Innen durch die Kopf- und -Fußleisten versetzten unteren Seitenleisten **Figur 5** das Lattenrost aufstützen und die beiden oberen Seitenleisten **Figur 5** das Lattenrost links und rechts vom Abrutschen verhindern.

Die Neuerung ist, dass dieses Gebilde so erweitert werden kann, dass die Kopf- und Fußleisten durch die Einfräsungen und Anordnung allein ohne weitere Mittel das Lattenrost so tragen, dass es höhenverstellbar wird.

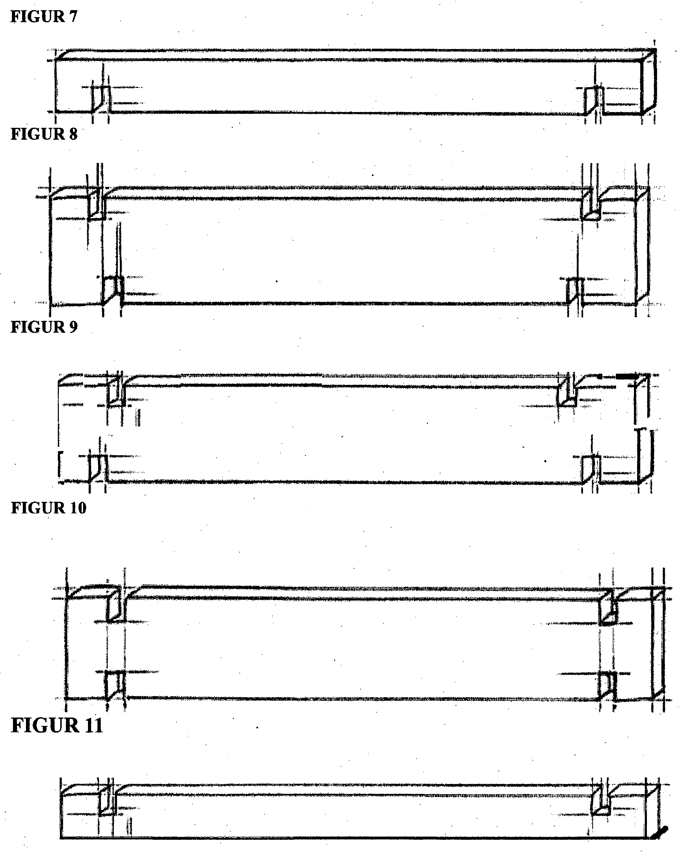

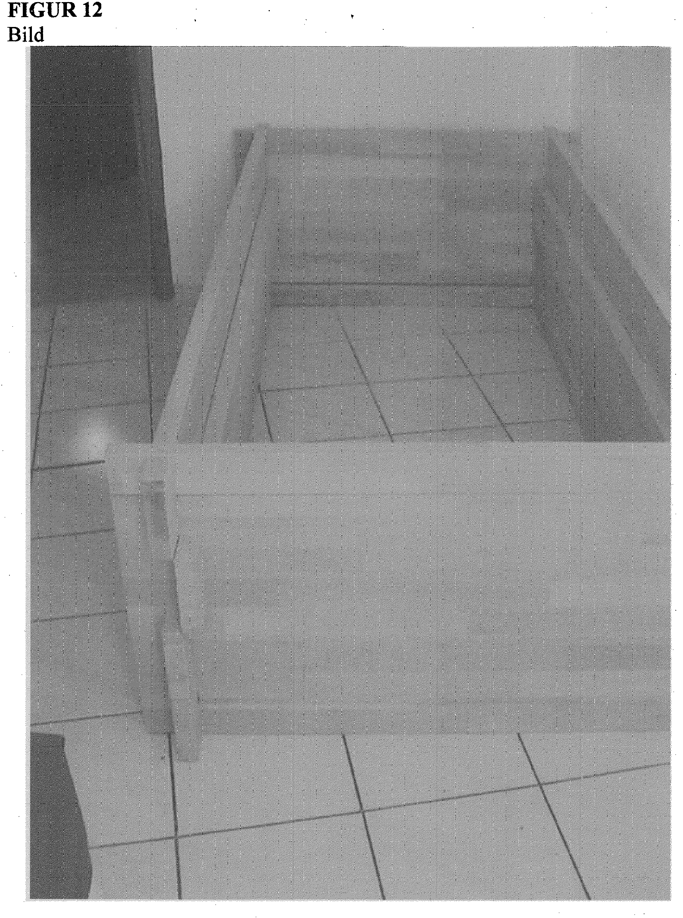

Bei der nächsten Darstellung, die mit den Seitenleisten **Figur 5** geschildert werden, aber in der Zeichung nur die Kopf- und Fußleisten gezeigt werden, liegt die schmale Kopf- und Fußleiste **Figur 11** mit den etwas mehr nach Außen gefrästen Nuten nach oben auf den Boden. In die Nuten werden wieder Seitenleisten **Figur 5** und die unteren Nuten von Seitenleiste **Figur 5** rechts und links eingesteckt.

In die oberen Nuten von Seitenleisten **Figur 5** werden nun die Kopf- und Fußleisten **Figur 10** eingesteckt, deren Nuten sowohl unten als auch oben etwas mehr nach Außen gefräst sind. Die unteren Nuten von **Figur 10** werden mit den oberen Nuten von **Figur 5** verbunden und eingesteckt.

Als nächstes werden 2 weitere Seitenleisten **Figur 5** mit den oberen Nuten von **Figur 10** eingesteckt, somit steigt das Bett um eine Stufe höher, in der Höhe der Seitenleisten **Figur 5****.** Als nächstes wird Kopf- und Fußleiste **Figur 9** mit den unteren zwei Nuten, die etwas mehr nach Außen gefräst sind, auf die Seitenleisten aufgesetzt und in die oberen Nuten der Seitenleisten eingesteckt.
In die oberen Nuten von **Figur 8****,** die mehr nach Innen gefräst sind, werden wiederum Seitenleisten **Figur 5** eingesteckt, und bilden die Träger des Lattenrostes, sie sind der Länge nach etwas mehr nach Innen versetzt.
In die oberen Nuten von **Figur 5** werden Kopf- und Fußleisten **Figur 7** gesteckt, mit den mehr nach Innen gefrästen Nuten, die nun nach unten angebracht sind. Das heißt **Figur 7** ist praktisch verkehrt herum eingesteckt, die mehr nach Innen gefrästen Nuten sind nach unten gerichtet, die mehr nach Außen gefrästen, nach oben.
Die nächsten Seitenleisten **Figur 5** werden mit den oberen mehr nach Außen gefrästen Nuten von verbunden. Sie verhindern dass das Lattenrost nach rechts oder nach links verrutscht.
Als letztes in dieser Formation werden die Kopf- und Fußleisten , mit den mehr nach Außen gefrästen Nuten auf die Seitenleisten eingedrückt und schließen oben die Kopf- und Fußteile ab.

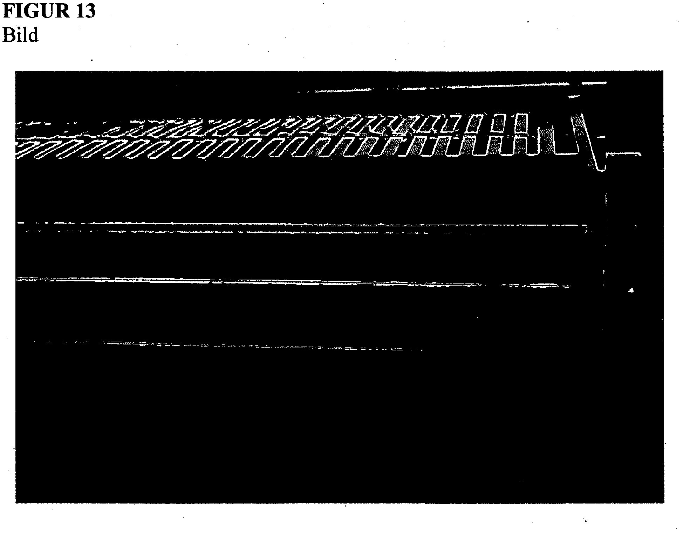

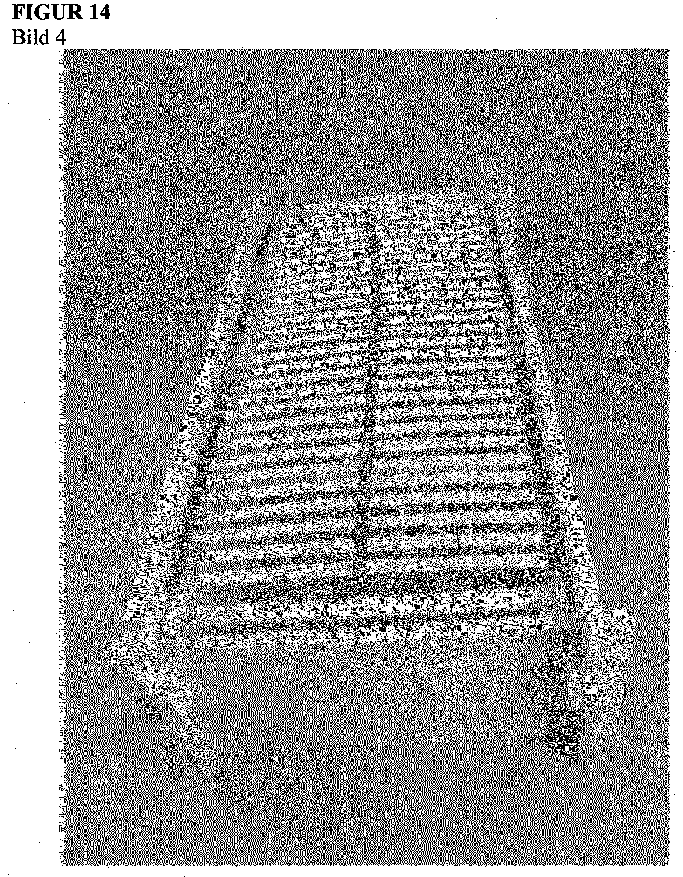

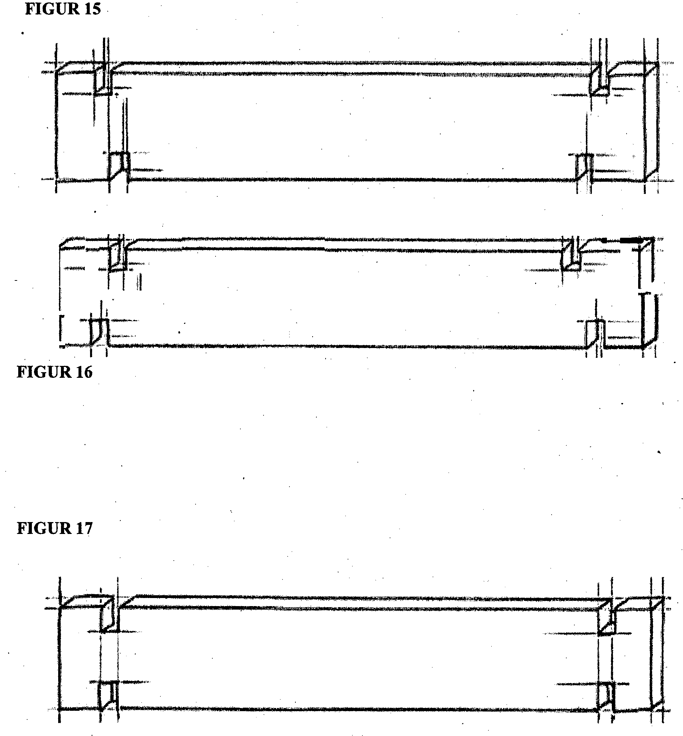

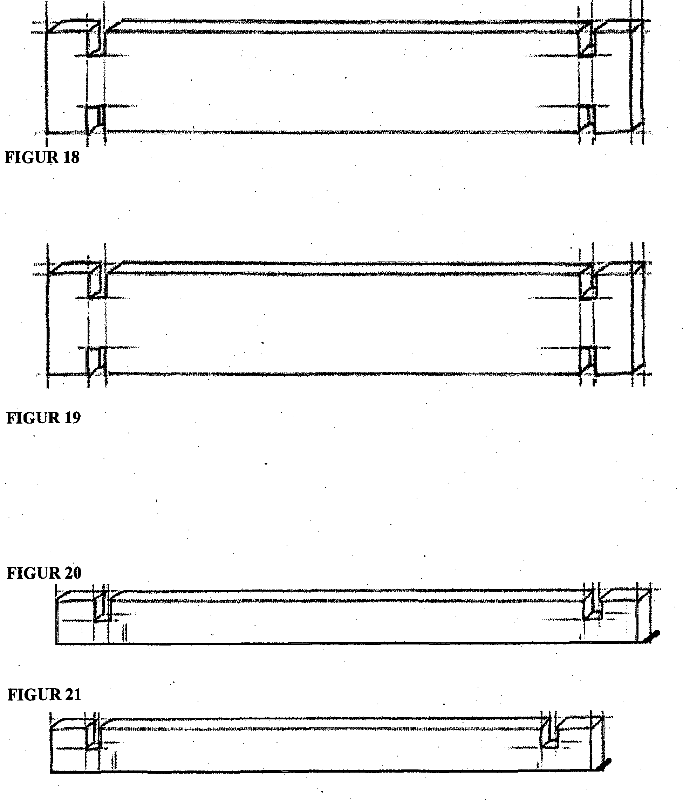

Abbildungen auf Seite 6 des Zeichenblattes
**FIGUR 7**
**FIGUR 8**
**FIGUR 9**
**FIGUR 10**
**FIGUR 11**
**FIGUR 12**
   Das **Bild** zeigt die Anordnung der Kopf und Fußleisten von unten **Figur 11; Figur 10; Figur 9; Figur 8; Figur 7** umgedreht, und dazwischen die Seitenleisten **Figur 5****.**
   Seite 7 des Zeichenblattes
**FIGUR 13** Die dritte Ebene der Seitenleisten **Figur 5** **auf Bild** zeigt deutlich die Versetzung nach Innen durch die Anordnung der Kopf- und Fußleisten. Diese Seitenleisten **Figur 5** tragen das Lattenrost, die über ihnen angeordneten Seitenleisten **Figur 5** schließen so ab, dass das Lattenrost weder links und recht abrutschen kann.
   Die Breite der Kopf- und Fußleisten werden entsprechend der Breite der jeweiligen Lattenrostmodelle gefräst, sodass sie den Abstand der Seitenleisten **Figur 5** als Träger und auch als Abschliessende Seitenleisten das Lattenrost sozusagen festhalten. Die Länge der Bettmodelle wird von der Länge der Seitenleisten **Figur 5** bestimmt.
**FIGUR 13**
   **Bild** zeigt von der seitlichen Ansicht die Versetzung der Seitenleisten **Figur 5** ohne das obere Kopf- und Fußteil **Figur 11****.**
   Abb Seite 8 des Zeichenblattes
**FIGUR 14**
   **Bild** mit aufliegendem Lattenrost.
**Erklärung 3**
   Die Neuheit ist schlicht und einfach - die Kopf- und Fußleisten **Figur 15****.** Die Nuten sind so versetzt, dass sie die Anordnung der Seitenleisten **Figur 5** nach Innen, sowohl nach Außen ermöglichen.
Kopf- und Fußteil **FIGUR 15**
   Zwei Nuten mehr nach Innen, zwei Nuten mehr nach Außen gefräst.
**FIGUR 16**
   versetzt die Seitenleisten und nach Innen als auch nach Außen.
**FIGUR 17**
   Das Kopf- und Fußteil **Figur 17**
   kann beliebig oft übereinander mit Seitenleisten **Figur 5** verbunden werden,
   auf diese Weise steigt das Bett jedes Mal um eine "Etage" von Kopf-
   und Fußteil **Figur 17** höher.
   Seite 11 des Zeichenblattes
   Die Kopf- und Fußleisten und dienen dem Abschluss des Kopf- und Fußseite des Bettes, je nach Bedarf, oben oder unten.
**FIGUR 18**
   mit zwei Nuten, die mehr nach Außen gefräst sind
**FIGUR 19**
   mit zwei Nuten, die mehr nach Innen gefräst sind.
**FIGUR 20**
**FIGUR 21**
**FIGUR 22**
**FIGUR 23**
   Kurze Leisten mit einer Nut oben und einer Nut unten bilden Stützen.
   Ineinander gesteckt, ohne Verknüpfung mit Seitenleisten an der Vorderstelle, bilden sie die Stützen und auch "Leiter", sodass man auf sich hochklettern kann, bis zur Höhe des hochgelegenem Bett. So werden zwei Betten übereinander gebildet, und oben sind die Kopf und Fußleisten **Figur 3** und eingesteckt mit den Seitenleisten **Figur 5****,** die als Trägerleisten des Lattenrost und als Seitenleisten zur Stabilität des Lattenrostes, sowie auch hinten als Stabilisatoren eingesetzt werden.

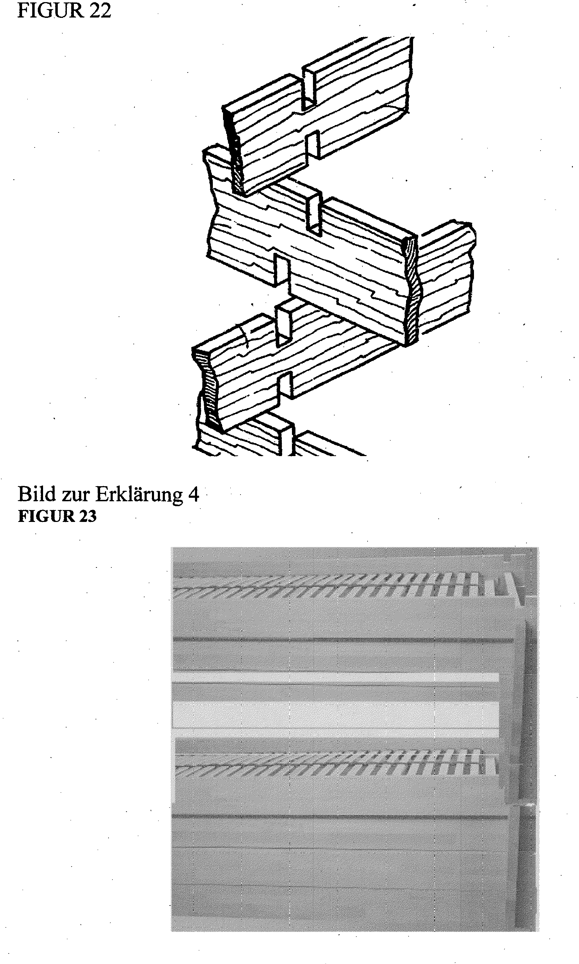

   **Figur 23** zur Erklärung 4

## Patentansprüche

1. Aus **Erklärung** 2, dass die Anordnung der Kopf- und Fußleisten die Höhenverstellbarkeit des Bettes ermöglichen und

2. aus **Erklärung 3**
Entsprechend **Erklärung 3** ist das Kernstück der Neuheit die Leiste A2, mit den versetzten Nuten. Durch sie werden die Seitenleisten A4, also die Längsleisten des Bettes mal nach Innen mal nach Außen angeordnet. Auf die nach Innen versetzten Seitenleisten A4 liegt das Lattenrost, auf die Außen versetzten Nuten von A2 können die Seitenleisten A4 eingesteckt werden ,die am Lattenrost abschließen und verhindern ,dass es nach rechts oder links verrutscht.
In der Zusammenstellung mit A5 kann A2 nach oben höhenverstellbar werden. A5 hebt das Bett durch Übereinanderanordnung von A5 an und A2 versetzt die Seitenleisten A4 mit dem Lattenrost. Wie in den Bildern gezeigt, kann das Bett in der Höhe beliebig verstellt werden.
